# EUROPÄISCHE PATENTSCHRIFT

(11) **EP 3 912 833 B1**
(45) Veröffentlichungstag und Bekanntmachung des Hinweises auf die Patenterteilung: **10.07.2024**
(21) Anmeldenummer: 21173457.9
(22) Anmeldetag: 12.05.2021
(51) Int. Cl.: B60C 9/22

(54) **FAHRZEUGLUFTREIFEN**
PNEUMATIC TYRE
PNEUMATIQUE DE VÉHICULE

(30) Priorität: 20.05.2020 DE 102020206314
(43) Veröffentlichungstag der Anmeldung: 24.11.2021
(73) Patentinhaber: Continental Reifen Deutschland GmbH, 30175 Hannover (DE)
(72) Erfinder: Reese, Wolfgang, 30419 Hannover (DE)
(74) Vertreter: Continental Corporation

(56) Entgegenhaltungen:
- EP-A1- 2 829 419
- WO-A1-2019/206477
- DE-A1- 102014 222 921
- DE-A1- 102016 223 304
- DE-A1- 102018 213 478
- US-A1- 2008 295 944

## Beschreibung

Die Erfindung betrifft einen Fahrzeugluftreifen mit einer Karkasse, einem Laufstreifen und einem Gürtel, welcher an seiner radial äußeren Seite durch eine Gürtelbandage mit etwa in Umfangsrichtung orientierten Festigkeitsträgern abgedeckt ist, wobei der Begriff "etwa in Umfangsrichtung" einen Winkel von 0° bis 5° in Bezug auf die Reifenumfangsrichtung meint, wobei die Gürtelbandage zumindest eine Gürtelbandagenlage aufweist, welche - im Reifenquerschnitt betrachtet - aus drei nebeneinander angeordneten Abschnitten besteht, nämlich einem Mittenabschnitt und jeweils einem an den Mittenabschnitt angrenzenden Seitenabschnitt, wobei die Festigkeitsträger der beiden Seitenabschnitte Korde aus dem Material PA4.6 sind und dass jeder Kord der Gürtelbandagenlage die Konstruktion x2 oder die Konstruktion x3 aufweist und in einer Dichte von 60 bis 200 epdm, vorzugsweise von 80 bis 160 epdm, angeordnet ist.

Es ist hinreichend bekannt, eine Gürtelbandage in Fahrzeugluftreifen anzuordnen. Die Gürtelbandage ist ein- oder mehrlagig ausgebildet, deckt die Gürtelränder ab und weist parallel und etwa in Umfangsrichtung verlaufende Festigkeitsträger in Form von in eine Kautschukmischung eingebetteten Korden auf. "Etwa in Umfangsrichtung" meint einen Winkel von 0° bis 5° in Bezug auf die Reifenumfangsrichtung.

Die Gürtelbandage wird bei der Reifenherstellung in Form von Lagen, Streifen oder Einzel-Festigkeitsträgern mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel thermisch und/oder zur besseren Haftung am einbettenden Gummi in einer der fachkundigen Person bekannten Art mit einer Imprägnierung vorbehandelt sind, in Längsrichtung einen Kalander oder einen Extruder zur Ummantelung mit der Kautschukmischung durchläuft. Oder aber es werden Festigkeitsträger verwendet, die klebrig imprägniert sind und ohne eine kalandrierte Haftmischung verarbeitet werden können.

Die Gürtelbandage dient insbesondere im Hochgeschwindigkeitseinsatz dazu, eine Erhebung des Reifens durch die im Fahrbetrieb auftretenden Fliehkräfte zu begrenzen und eine möglichst optimale Kontur des Reifens zu erhalten. Zudem sollen die Festigkeitsträger der Gürtelbandage die Gürtellagen, insbesondere die Gürtelkanten für die Schnelllauffestigkeit und Dauerhaltbarkeit niederhalten. Hierfür müssen in den Schulterbereichen des Fahrzeugluftreifens größere Kräfte gebunden werden als im Mittenbereich. Zudem erwärmt sich der Bereich um die Gürtelkanten stärker als der mittige Bereich des Gürtels.

Aus der DE 10 2016 202 930 A1 ist beispielsweise ein Fahrzeugluftreifen mit einer Gürtelbandagenlage aus drei Abschnitten, einem Mittenabschnitt und zwei Seitenabschnitten, bekannt. Im Mittenabschnitt sind Korde aus PA6.6 (Polyamid6.6) und in den Seitenabschnitten sind Hybridkorde aus Aramid und PET (Polyethylenterephthalat) oder Aramid und PA6.6 angeordnet.

Aus der WO 2019/206477 A1 ist ebenso ein Fahrzeugluftreifen mit einer Gürtelbandagenlage aus drei Abschnitten, nämlich einem Mittenabschnitt und zwei Seitenabschnitten, bekannt. Hierbei weisen die Festigkeitsträger des Mittenabschnitts die Konstruktion x1 auf und die zwei Seitenabschnitte weisen als Festigkeitsträger gleiche Korde aus wenigstens zwei miteinander verdrehten Garnen auf. Die Dichte der Festigkeitsträger im Mittenabschnitt ist geringer als die Dichte der Festigkeitsträger in den Seitenabschnitten. Unter anderem werden Beispiele beschrieben, bei denen die Festigkeitsträger der Mittenabschnitte aus PET und die Festigkeitsträger der Seitenabschnitte aus PA 6.6 bestehen.

Aus der DE 10 2016 223 304 A1 ist weiterhin eine Gürtelbandagenlage aus drei Abschnitten bekannt, wobei die Festigkeitsträger des Mittenabschnittes Korde aus PA6.6 einer bestimmten Kordkonstruktion sind, wobei die Korde des Seitenabschnittes die gleiche Konstruktion wie die Korde des Mittenabschnittes aufweisen und wobei die Korde des Seitenabschnittes aus PA4.6 (Polyamid4.6) einer bestimmten Kordkonstruktion sind, welches eine um wenigstens 20% höhere feinheitsbezogene Festigkeit bei einer Temperatur von 80°C und einer Dehnung von 4% aufweist, als das PA6.6 des Mittenabschnittes, wobei die feinheitsbezogene Festigkeit nach ASTM D885-16 ermittelt ist.

Es ist die Aufgabe der vorliegenden Erfindung, einen schnelllauffesten Fahrzeugluftreifen mit einer Gürtelbandage bereitzustellen, welcher im Hochgeschwindigkeitsbereich einen ausreichenden Modul über die gesamte Reifenbreite zur Verfügung stellt, Vorteile hinsichtlich des Rollwiderstandes des Reifens aufweist und kostengünstig ist.

Gelöst wird die Aufgabe erfindungsgemäß dadurch, dass die Korde des Mittenabschnittes Korde aus dem Material PET sind.

Die Korde der Seitenabschnitte sind aus Garnen aus PA4.6 hergestellt. PA4.6 weist eine gute thermische Stabilität auf, welche beispielsweise besser als die von PA6.6 ist. Der Modul ist jedoch dem von PA6.6 vergleichbar. Es ist weniger an Festigkeit bei hohen Temperaturen verloren, wodurch die Gürtelkanten im Hochgeschwindigkeitsbetrieb erwünscht niedergehalten werden. Es sind keine zusätzlichen Kantenstreifen erforderlich. Die Korde aus dem Material PET des Mittenabschnittes weisen ebenfalls eine gute thermische Stabilität auf, welche höher als beispielsweise die von PA6.6 ist. PET ist vergleichsweise kostengünstig marktverfügbar und kostengünstiger als beispielsweise PA6.6 und weist bessere Hystereseeigenschaften als beispielsweise PA6.6 auf, was sich vorteilhaft auf den Rollwiderstand auswirkt.

Jeder Kord der Gürtelbandagenlage weist die Konstruktion x2 oder die Konstruktion x3 auf und ist in einer Dichte von 60 bis 200 epdm, vorzugsweise von 80 bis 160 epdm, angeordnet. In diesen Bereichen ist je nach Feinheit der Korde eine ausreichende Festigkeit hinsichtlich der Reifeneigenschaften erreicht und zudem ein ausreichender Abstand zwischen den Korden gewährleistet, so dass sich genügend Gummi zwischen den Korden befindet.

Vorteilhaft ist es, wenn die PET-Korde des Mittenabschnittes der Gürtelbandagenlage die Konstruktion 360 dtex x 2 oder 550 dtex x 2 aufweisen und wenn die PA4.6-Korde der beiden Seitenabschnitte der Gürtelbandagenlage jeweils die Konstruktion 470 dtex x2 aufweisen und in einer Dichte von 90 bis 150 epdm, bevorzugt in einer Dichte von 100-130 epdm, angeordnet sind. In diesen Bereichen ist je nach Feinheit der Korde eine ausreichende Festigkeit hinsichtlich der Reifeneigenschaften erreicht und zudem ein ausreichender Abstand zwischen den Korden gewährleistet, so dass sich genügend Gummi zwischen den Korden befindet.

In einer anderen vorteilhaften Ausführung der Erfindung weisen die PET-Korde des Mittenabschnitts der Gürtelbandagenlage die Konstruktion 1100 dtex x 2 auf und die PA4.6-Korde der beiden Seitenabschnitte der Gürtelbandagenlage weisen jeweils die Konstruktion 940 dtex x2 auf, wobei sowohl die PET-Korde des Mittenabschnitts als auch die PA4.6-Korde der beiden Seitenabschnitte jeweils in einer Dichte von 70 bis 120 epdm, bevorzugt in einer Dichte von 80-110 epdm, angeordnet sind.

Zweckmäßig ist es, wenn jeder der beiden Seitenabschnitte der Gürtelbandagenlage eine axiale Breite von 3 % bis 47 %, insbesondere von 5 % bis 30 %, insbesondere von 10 % bis 20 %, der axialen Breite der Gürtelbandagenlage einnimmt, gemessen entlang der Kontur der Gürtelbandagenlage. Hierdurch ist eine gute Kraftverteilung über die Gürtelbreite im Hochgeschwindigkeitsbereich erreicht, die weiter in den bevorzugten Bereichen verbessert ist.

Zweckmäßig ist es, wenn die Gürtelbandage einlagig ausgebildet ist und aus dem Mittenabschnitt und den beiden Seitenabschnitten besteht. Durch die Einlagigkeit ist ein Rollwiderstands- und Kostenvorteil erreicht.

Eine alternative Ausführung der Erfindung ist dadurch gekennzeichnet, dass die Gürtelbandage zweilagig ausgebildet ist, wobei in der Gürtelbandage eine weitere Gürtelbandagenlage angeordnet ist, welche radial innen in Bezug auf die aus drei Abschnitten bestehende Gürtelbandagenlage angeordnet ist und wobei diese weitere Gürtelbandagenlage über ihre gesamte axiale Breite Festigkeitsträger aus PA oder PES aufweist.

Der Twistfaktor α eines jeden Multifilamentgarnes oder des Kordes liegt in einem Bereich von 100 bis 250, vorzugsweise in einem Bereich von 120 bis 180, wobei α=Twist [t/m] x (Feinheit [tex]/1000)^{1/2}.

Bei dem erfindungsgemäßen Fahrzeugluftreifen handelt es sich vorzugsweise um einen PKW-Reifen oder einen Nutzfahrzeugreifen.

Weitere Merkmale, Vorteile und Einzelheiten der Erfindung werden nun anhand der Figuren, die schematische Ausführungsbeispiele darstellen, näher beschrieben. Dabei zeigt die:
Fig. 1 einen Querschnitt durch einen Fahrzeugluftreifen;
Fig. 2 einen Querschnitt einer Gürtelbandage mit einer einzigen Gürtelbandagenlage eines erfindungsgemäßen Fahrzeugluftreifens;
Fig. 3 einen Querschnitt einer anderen Gürtelbandage mit zwei Gürtelbandagenlagen eines anderen erfindungsgemäßen Fahrzeugluftreifens.

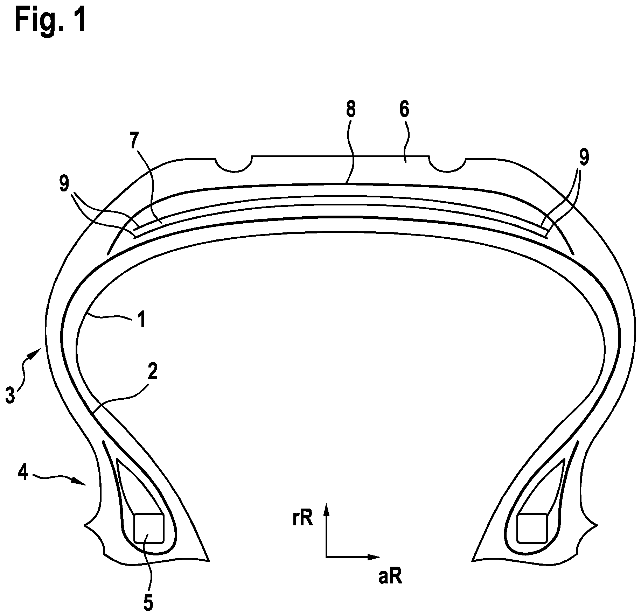

Die Figur 1 zeigt einen radialen Schnitt durch einen Fahrzeugluftreifen für einen Personenkraftwagen. Die wesentlichen Bauteile, aus welchen sich der dargestellte Fahrzeugluftreifen zusammensetzt, sind eine weitgehend luftundurchlässige Innenschicht 1, eine Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist, einen radial oberhalb der Karkasse befindlichen profilierten Laufstreifen 6 und einen zwischen dem Laufstreifen 6 und der Karkasse 2 angeordneten, zwei Festigkeitsträgerlagen beinhaltenden Gürtel 7, welcher radial außen mit einer Gürtelbandage abgedeckt ist, welche eine einzige Gürtelbandagenlage 8 umfasst. Die Gürtelbandagenlage 8 deckt die Gürtelkanten 9 ab und weist Festigkeitsträger auf, welche parallel und etwa in Umfangsrichtung des Fahrzeugluftreifens entlang dessen axialer Breite gewickelt sind.

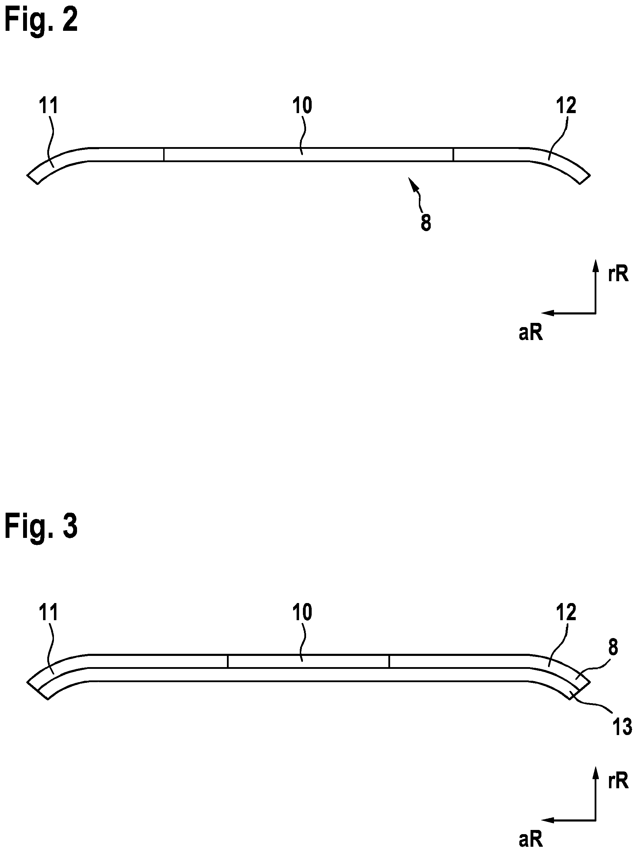

Die Figur 2 zeigt einen Querschnitt einer Gürtelbandage eines Fahrzeugluftreifens mit einer einzigen Gürtelbandagenlage 8 gemäß der Erfindung. Die Gürtelbandagenlage 8 weist etwa in Umfangsrichtung angeordneten Festigkeitsträger auf und besteht aus drei nebeneinander angeordneten Abschnitten: einem Mittenabschnitt 10 und jeweils einem an den Mittenabschnitt 10 angrenzenden Seitenabschnitt 11, 12. Der Mittenabschnitt 10 weist Korde der Konstruktion 550 dtex x2 aus PET auf. Gemäß Kordkonstruktion sind zwei erstverdrehte Garne jeweils mit der Garnfeinheit 550 dtex aus PET miteinander endverdreht. Diese Korde sind im Mittenabschnitt 10 in einer Dichte von 120 epdm angeordnet. Die Seitenabschnitte 11, 12 weisen Korde der Konstruktion 470 dtex x2, aber aus PA4.6 auf. Die Korde der Seitenabschnitte 11, 12 sind in einer Dichte von 130 epdm angeordnet.

Die Figur 3 zeigt einen Querschnitt einer anderen Gürtelbandage mit zwei Gürtelbandagenlagen 8, 13 eines erfindungsgemäßen Fahrzeugluftreifens. Die radial äußere Gürtelbandagenlage 8 ist gleich der in Figur 2 beschriebenen Gürtelbandagenlage aufgebaut und besteht aus drei axial benachbart angeordneten Abschnitten: Schulterabschnitt 11 - Mittenabschnitt 10 - Schulterabschnitt 12. Radial innerhalb dieser aus drei Abschnitten 10, 11, 12 bestehenden Gürtelbandagenlage 8 ist eine weitere Gürtelbandagenlage 13 angeordnet. Diese weitere Gürtelbandagenlage 13 weist über ihre gesamte axiale Breite durchgehend den selben Kord aus PA oder PES der gleichen Konstruktion wie im Mittenabschnitt 10 auf, welcher in einer Dichte von 130 epdm angeordnet ist.

### Bezugszeichenliste

### (Teil der Beschreibung)

- 1: Innenschicht
- 2: Karkasse
- 3: Seitenwand
- 4: Wulstbereich
- 5: Wulstkern
- 6: Laufstreifen
- 7: Gürtel
- 8: Gürtelbandagenlage
- 9: Gürtelkante
- 10: Mittenabschnitt
- 11: Seitenabschnitt
- 12: Seitenabschnitt
- 13: weitere Gürtelbandagenlage
- rR: radiale Richtung
- aR: axiale Richtung

## Patentansprüche

1. Fahrzeugluftreifen mit einer Karkasse (2), einem Laufstreifen (6) und einem Gürtel (7), welcher an seiner radial äußeren Seite durch eine Gürtelbandage mit etwa in Umfangsrichtung orientierten Festigkeitsträgern abgedeckt ist, wobei der Begriff "etwa in Umfangsrichtung" einen Winkel von 0° bis 5° in Bezug auf die Reifenumfangsrichtung meint, wobei die Gürtelbandage zumindest eine Gürtelbandagenlage (8) aufweist, welche - im Reifenquerschnitt betrachtet - aus drei nebeneinander angeordneten Abschnitten besteht, nämlich einem Mittenabschnitt (10) und jeweils einem an den Mittenabschnitt (10) angrenzenden Seitenabschnitt (11, 12), wobei die Festigkeitsträger der beiden Seitenabschnitte (11, 12) Korde aus dem Material PA4.6 sind und dass jeder Kord der Gürtelbandagenlage (8) die Konstruktion x2 oder die Konstruktion x3 aufweist und in einer Dichte von 60 bis 200 epdm, vorzugsweise von 80 bis 160 epdm, angeordnet ist,
**dadurch gekennzeichnet,**
**dass** die Korde des Mittenabschnittes (10) Korde aus dem Material PET sind.

2. Fahrzeugluftreifen nach Anspruch 1, **dadurch gekennzeichnet, dass** die PET-Korde des Mittenabschnitts (10) der Gürtelbandagenlage (8) die Konstruktion 360 dtex x 2 oder 550 dtex x 2 aufweisen und dass diePA4.6-Korde der beiden Seitenabschnitte (11, 12) der Gürtelbandagenlage (8) jeweils die Konstruktion 470 dtex x2 aufweisen und in einer Dichte von 90 bis 150 epdm, bevorzugt in einer Dichte von 100-130 epdm, angeordnet sind.

3. Fahrzeugluftreifen nach Anspruch 1, **dadurch gekennzeichnet, dass** die PET-Korde des Mittenabschnitts (10) der Gürtelbandagenlage (8) die Konstruktion 1100 dtex x 2 aufweisen und dass die PA4.6-Korde der beiden Seitenabschnitte (11, 12) der Gürtelbandagenlage (8) jeweils die Konstruktion 940 dtex x2 aufweisen und dass sowohl die PET-Korde des Mittenabschnitts (10) als auch die PA4.6-Korde der beiden Seitenabschnitte (11, 12) jeweils in einer Dichte von 70 bis 120 epdm, bevorzugt in einer Dichte von 80-110 epdm, angeordnet sind.

4. Fahrzeugluftreifen nach einem der vorangegangenen Ansprüche, **dadurch gekennzeichnet, dass** jeder der beiden Seitenabschnitte (11, 12) der Gürtelbandagenlage (8) eine axiale Breite von 3 % bis 47 %, insbesondere von 5 % bis 30 %, insbesondere von 10 % bis 20 %, der axialen Breite der Gürtelbandagenlage (8) einnimmt, gemessen entlang der Kontur der Gürtelbandagenlage (8).

5. Fahrzeugluftreifen nach einem der vorangegangenen Ansprüche, **dadurch gekennzeichnet, dass** die Gürtelbandage (8) einlagig ausgebildet ist und aus dem Mittenabschnitt (10) und den beiden Seitenabschnitten (11, 12) besteht.

6. Fahrzeugluftreifen nach einem der Ansprüche 1 bis 5, **dadurch gekennzeichnet, dass** die Gürtelbandage zweilagig ausgebildet ist, wobei in der Gürtelbandage eine weitere Gürtelbandagenlage angeordnet ist, welche radial innen in Bezug auf die aus drei Abschnitten bestehende Gürtelbandagenlage angeordnet ist und wobei diese weitere Gürtelbandagenlage über ihre gesamte axiale Breite Festigkeitsträger aus PA oder PES aufweist.

## Claims

1. Pneumatic vehicle tyre comprising a carcass (2), a tread (6) and a breaker belt (7), which is covered on its radially outer side by a belt bandage (8) with reinforcing elements oriented approximately in the circumferential direction, wherein the term "approximately in the circumferential direction" means an angle of 0° to 5° with reference to the circumferential direction of the tyre, wherein the belt bandage has at least one belt bandage ply (8), which - when seen in the cross section of the tyre - consists of three portions arranged next to one another, to be specific a central portion (10) and side portions (11, 12) respectively adjoining the central portion (10), wherein the reinforcing elements of the two side portions (11, 12) are cords of the material PA4.6 and wherein each cord of the belt bandage ply (8) has the construction x2 or the construction x3 and is arranged in a density of 60 to 200 epdm, preferably of 80 to 160 epdm,
**characterized**
**in that** the cords of the central portion (10) are cords of the material PET.

2. Pneumatic vehicle tyre according to Claim 1, **characterized in that** the PET cords of the central portion (10) of the belt bandage ply (8) have the construction 360 dtex x2 or 550 dtex x2 and **in that** the PA4.6 cords of the two side portions (11, 12) of the belt bandage ply (8) each have the construction 470 dtex x2 and are arranged in a density of 90 to 150 epdm, preferably in a density of 100-130 epdm.

3. Pneumatic vehicle tyre according to Claim 1, **characterized in that** the PET cords of the central portion (10) of the belt bandage ply (8) have the construction 1100 dtex x2 and **in that** the PA4.6 cords of the two side portions (11, 12) of the belt bandage ply (8) each have the construction 940 dtex x2 and **in that** both the PET cords of the central portion (10) and the PA4.6 cords of the two side portions (11, 12) are each arranged in a density of 70 to 120 epdm, preferably in a density of 80-110 epdm.

4. Pneumatic vehicle tyre according to one of the preceding claims, **characterized in that** each of the two side portions (11, 12) of the belt bandage ply (8) assumes an axial width of 3% to 47%, in particular of 5% to 30%, in particular of 10% to 20%, of the axial width of the belt bandage ply (8), measured along the contour of the belt bandage ply (8).

5. Pneumatic vehicle tyre according to one of the preceding claims, **characterized in that** the belt bandage (8) is formed as a single ply and consists of the central portion (10) and the two side portions (11, 12).

6. Pneumatic vehicle tyre according to one of Claims 1 to 5, **characterized in that** the belt bandage is formed as two plies, wherein arranged in the belt bandage is a further belt bandage ply, which is arranged radially on the inside with reference to the belt bandage ply consisting of three portions and wherein this further belt bandage ply has reinforcing elements of PA or PES over its entire axial width.

## Revendications

1. Pneumatique de véhicule avec une carcasse (2), une bande de roulement (6) et une ceinture (7) qui est recouverte sur son côté radialement extérieur par un bandage de ceinture avec des supports de résistance orientés approximativement dans la direction circonférentielle, l'expression « approximativement dans la direction circonférentielle » signifiant un angle de 0° à 5° par rapport à la direction circonférentielle du pneu, le bandage de ceinture présentant au moins une couche de bandage de ceinture (8) qui - vue dans la section transversale du pneu - est constituée de trois sections agencées les unes à côté des autres, à savoir une section centrale (10) et respectivement une section latérale (11, 12) adjacente à la section centrale (10), les supports de résistance des deux sections latérales (11, 12) étant des câblés en le matériau PA4.6 et chaque câblé de la couche de bandage de ceinture (8) présentant la construction x2 ou la construction x3 et étant agencé en une densité de 60 à 200 epdm, de préférence de 80 à 160 epdm, **caractérisé en ce que**
les câblés de la section centrale (10) sont des câblés en le matériau PET.

2. Pneumatique de véhicule selon la revendication 1, **caractérisé en ce que** les câblés en PET de la section centrale (10) de la couche de bandage de ceinture (8) présentent la construction 360 dtex x 2 ou 550 dtex x 2 et **en ce que** les câblés en PA4.6 des deux sections latérales (11, 12) de la couche de bandage de ceinture (8) présentent chacun la construction 470 dtex x 2 et sont agencés en une densité de 90 à 150 epdm, de préférence en une densité de 100 à 130 epdm.

3. Pneumatique de véhicule selon la revendication 1, **caractérisé en ce que** les câblés en PET de la section centrale (10) de la couche de bandage de ceinture (8) présentent la construction 1 100 dtex x 2 et **en ce que** les câblés en PA4.6 des deux sections latérales (11, 12) de la couche de bandage de ceinture (8) présentent chacun la construction 940 dtex x2 et **en ce que** les câblés en PET de la section centrale (10) et les câblés en PA4.6 des deux sections latérales (11, 12) sont agencés chacun en une densité de 70 à 120 epdm, de préférence en une densité de 80 à 110 epdm.

4. Pneumatique de véhicule selon l'une quelconque des revendications précédentes, **caractérisé en ce que** chacune des deux sections latérales (11, 12) de la couche de bandage de ceinture (8) occupe une largeur axiale de 3 % à 47 %, notamment de 5 % à 30 %, notamment de 10 % à 20 %, de la largeur axiale de la couche de bandage de ceinture (8), mesurée le long du contour de la couche de bandage de ceinture (8).

5. Pneumatique de véhicule selon l'une quelconque des revendications précédentes, **caractérisé en ce que** le bandage de ceinture (8) est réalisé en une seule couche et est constitué de la section centrale (10) et des deux sections latérales (11, 12).

6. Pneumatique de véhicule selon l'une quelconque des revendications 1 à 5, **caractérisé en ce que** le bandage de ceinture est réalisé en deux couches, une autre couche de bandage de ceinture étant agencée dans le bandage de ceinture, laquelle est agencée radialement vers l'intérieur par rapport à la couche de bandage de ceinture constituée de trois sections, et cette autre couche de bandage de ceinture présentant des supports de résistance en PA ou PES sur toute sa largeur axiale.
